# EUROPEAN PATENT APPLICATION

(11) **EP 1 628 138 A2**
(43) Date of publication of application: **22.02.2006**
(21) Application number: 05076724.3
(22) Date of filing: 27.07.2005
(51) Int. Cl.: G01P 15/08, G01P 15/135, G01P 15/12

(54) **Impact detector with electrostatic counter-force, and its manufacturing process**

(30) Priority: 19.08.2004 US 922072
(71) Applicant: Delphi Technologies, Inc., Troy, MI 48007 (US)
(72) Inventor: Rich, David B., Kokomo, IN 46901 (US)
(74) Representative: Denton, Michael John

(57) **Abstract**

A process for making an acceleration sensitive impact detector involves steps of fabricating a semiconductive seismic mass layer; fabricating a seimconductive substrate having a recess in a surface thereof; fixing the seismic layer to the surface of the substrate so that the seismic mass layer covers the recess; etching a portion of the seismic mass layer overlying the recess to form a seismic mass that is supported over the recess by a beam; printing an electrically conductive circuit on the seismic mass and on the substrate, the printed circuits allowing an electrostatic force to be applied between the seismic mass and the substrate which is adapted to force the seismic mass away from the bottom of the recess formed in the substrate; and fixing a cap over the seismic mass to define a sealed cavity enclosing the seismic mass between the recess and the cap. The process provides an improved impact detector that is reliable and may be fabricated at a lower cost as compared with conventional processes and designs.

## Description

### TECHNICAL FIELD

The invention disclosed herein relates to impact detectors and more particularly to an improved impact detector design and method for making same, which provide reliable, low-cost devices of this type.

### BACKGROUND OF THE INVENTION

Impact detectors are employed in vehicles to actuate a vehicle occupant protection device, such as an inflatable occupant restraint system, when the vehicle impacts an object with sufficient force to cause injury to the occupant unless the detection device is actuated. Known devices of this type have included a moveable seismic mass retained in a non-displaced position by a motion resistant force, and electrical circuitry that actuates the protection device when the seismic mass is displaced by an impulsive force of sufficient magnitude and duration to overcome any motion resistant forces exerted on the seismic mass, including any viscous damping forces or the like.

An impact detector of the type commonly deployed in vehicles to actuate protection devices and prevent injury to a vehicle occupant is described in commonly owned U.S. Patent No. 5,177,331, of which the entire contents are hereby incorporated by reference in this document. This known device includes a center chip which is a micro-machined silicon wafer having an integral seismic mass, a perimeter ring surrounding the seismic mass, and a plurality of integral beams interconnecting the seismic mass and the perimeter ring. The beams apply a tensile force to the seismic mass and retain the seismic mass in the static or non-displaced position. A back plate is fixed to one side of the center chip and includes a plurality of switch contacts spaced from switch contacts on the seismic mass. A cover plate is fixed to the other side of the center chip. An electrostatic voltage is applied between the seismic mass and the back plate to establish an electrostatic attractive force between the seismic mass and the back plate. Normally, the electrostatic attractive force is sufficient to overcome the motion resistant tensile force applied to the seismic mass by the beams so that the seismic mass is maintained in the static or non-displaced position relative to the back plate. When an impulsive force of sufficient magnitude and duration is applied to the device in an appropriate direction, the electrostatic attractive force coupled with the inertial reaction of the seismic mass overcomes the tensile force of the beams and moves the seismic mass to a displaced position wherein the switch contacts on the seismic mass close to the switch contacts on the back plate and cause the impact detection circuitry to actuate the protection device.

Devices of the type described in U.S. Patent No. 5,177,331 would be expected to perform adequately. However, the conventional processing technology used for fabricating silicon-based sensors of this type is relatively complicated and involves the use of expensive equipment and materials. As a result of this, the known impact detectors of the type described in U.S. Patent No. 5,177,331 would be relatively expensive.

Thus, it is an object of this invention to provide an improved impact detector design and process that provides reliable devices of this type at a lower cost.

### SUMMARY OF THE INVENTION

The invention is directed to a simplified and improved design for an impact detector, and a simplified and improved process for making an impact detector.

In accordance with an aspect of the invention, a process for making an impact detector includes steps of fabricating a semiconductive seismic mass layer; fabricating a semiconductive substrate having a recess in a surface thereof; fixing the seismic layer to the surface of the substrate so that the seismic mass layer covers the recess; etching a portion of the seismic mass layer overlying the recess to form a seismic mass that is supported over the recess by at least one beam; printing an electrically conductive circuit on the seismic mass layer and on the substrate, the printed circuits allowing an electrostatic force to be applied between the seismic mass and the substrate; and fixing a cap over the seismic mass to define a sealed cavity enclosing the seismic mass between the recess and the cap.

In accordance with another aspect of the invention, an impact detector includes a semiconductive substrate having a recess; a semiconductive seismic mass supported over the recess by at least one beam; electrical circuits on each of the seismic mass and the substrate, the electrical circuits configured to allow an electrostatic force to be applied between the seismic mass and the substrate; and a cap over the seismic mass, the cap being configured to enclose the seismic mass in a sealed cavity between the recess and the cap.

These and other features, advantages and objects of the present invention will be further understood and appreciated by those skilled in the art by reference to the following specification and claims.

### BRIEF DESCRIPTION OF THE DRAWINGS

Fig. 1 is schematic perspective cross-sectional view of an impact detector embodying principles of the invention.
Fig. 2 is a graphical illustration of the response of the impact detector illustrated in Fig. 1 to acceleration pulses of varying amplitude.
Figs. 3 and 4 are schematic cross-sectional views of the seismic mass layer used during the fabrication of the impact detector shown in Fig. 1, during various stages of the fabrication of the seismic mass layer.
Figs. 5-13 are schematic cross-sectional views of the impact detector of Fig. 1 during various stages of the fabrication process.
Fig. 14-17 are schematic cross-sectional views of the cap for the device of Fig. 1 at various stages of the fabrication process.

### DESCRIPTION OF THE PREFERRED EMBODIMENT

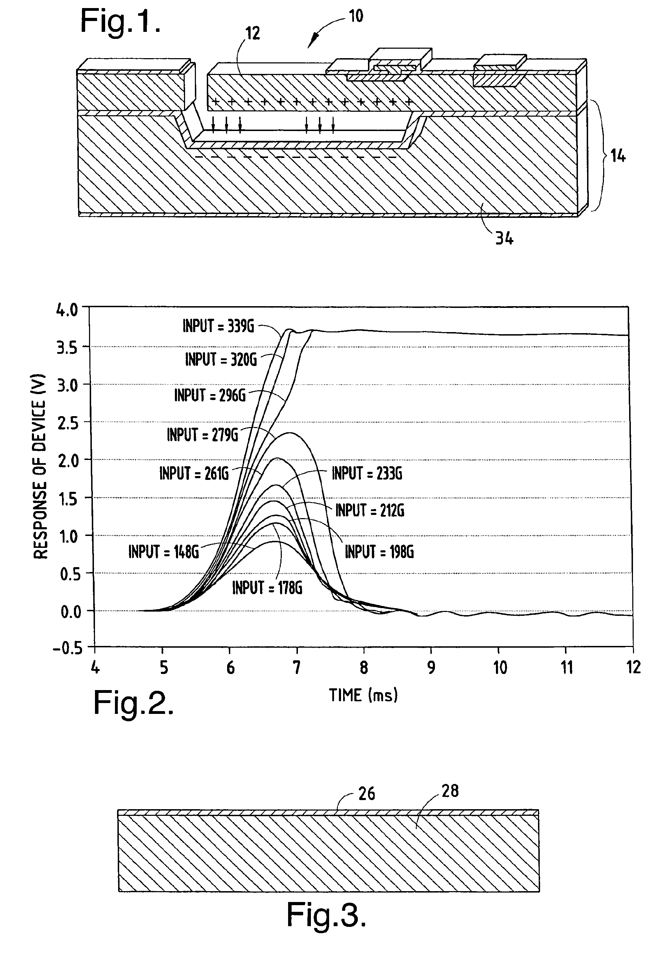

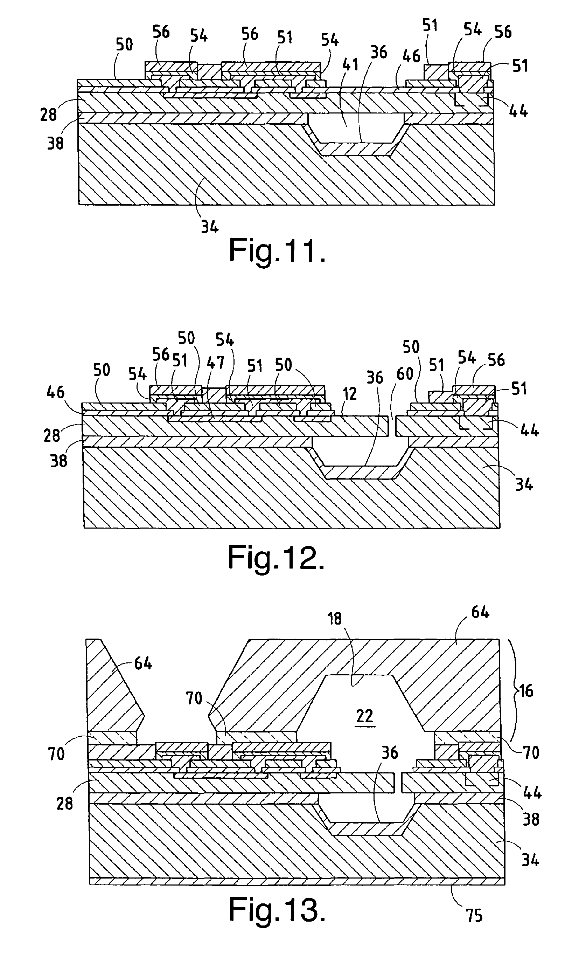

Shown in Fig. 1 is an impact detector 10 embodying principles of the invention. Impact detector 10 includes a seismic mass 12 fixed to a substrate 14. A cap 16 (Fig. 13) is configured to define a recess 18, which together with a recess 36 defined in substrate 14 form a sealed cavity 22. Cavity 22 is filled with air that serves as a viscous damper against displacement of seismic mass 12.

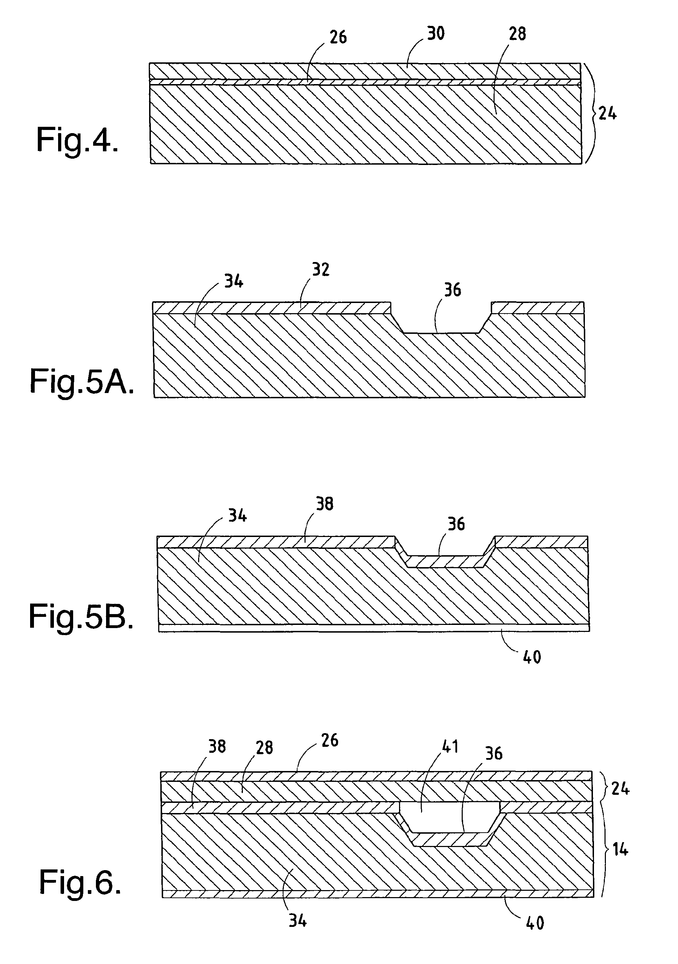

Device 10 may be prepared by separately making a seismic mass layer 24 (Fig. 4) and substrate layer 14, fixing seismic mass layer 24 to substrate layer 14, modifying the exposed surface of seismic mass layer 24 to define a cantilevered seismic mass 12 and electrical circuitry, and fixing a separately prepared cap 16 to modified seismic mass layer 24.

Seismic mass layer 24 may be prepared by epitaxially growing a film 26 of silicon that is heavily doped (a p⁺⁺ film or lamina) with boron and germanium on an n-type silicon wafer 28, and subsequently epitaxially growing an n-type silicon film 30 over the p⁺⁺ film. A typical thickness for the n-type silicon wafer is about 25 mils. Prior to epitaxially growing p⁺⁺ film 26, the n-type silicon wafer is preferably polished on both of its opposing major sides. The p⁺⁺ film 26 may be grown to a thickness of from about 2.5 µm to about 5 µm, with the optimal thickness typically being about 3 µm. Heavily doped p⁺⁺ film 26 will serve as an etch-stop layer during subsequent processing. The relative concentrations of the boron and germanium are preferably selected to minimise stress within p⁺⁺ film 26. Suitable concentrations are from about 1.2 x 10²⁰ to 1.5 x 10²⁰ atoms/cm³ for boron, and typically about 2% germanium by weight. The n-type film 30 is typically grown to a thickness of from about 8 µm to about 50 µm, the selected thickness being chosen based on specific requirements of the sensor.

The seismic mass layer 24 can also be prepared using SOI (silicon-on-insulator) technology, which would effectively use an oxide film as the etch-stop instead or the p⁺⁺ film. Other etch-stop films could also be used.

Substrate layer 14 may be prepared by first forming a thermal oxide film 32 (e.g., a silicon dioxide film) on an n-type silicon wafer 34. The thickness of n-type silicon wafer 34 is not particularly critical. However, a suitable thickness for n-type silicon wafer 34 is about 25 mils. Preferably, n-type silicon wafer 34 is polished on both sides prior to growing thermal oxide film 32. Thermal oxide films may be grown on a suitable substrate by heating the substrate in air at a temperature sufficient to cause thermal oxidation, and for a time sufficient to achieve a desired thickness. A suitable temperature for effecting thermal oxidation is about 850°C. A suitable thermal oxide film thickness is about 8 to about 10 kÅ (about 800-1000 nm).

Alternatively, the substrate layer can start with a p-type wafer 34, on which an n⁺⁺ film is epitaxially grown and serves as an etch-stop during subsequent processing.

A recess 36 (Fig. 5A) may be etched through thermal oxide film 32 and into silicon wafer 34 using conventional photoresist materials, photomasking, exposure and development of the photoresist, and etching techniques. A suitable etchant for use with substrate layer 14 is, for example, potassium hydroxide. Thereafter, the remainder of thermal oxide film 32 may be removed from the substrate layer 14, such as by stripping with hydrofluoric acid. Prior to fixing seismic mass layer 24 to substrate layer 14, a relatively thick (e.g., about 20 kÅ) thermal oxide film 38, 40 (Fig. 5B) may be formed on each of the respective sides (upper and lower) of the substrate layer. Thermal oxide film 38 functions as a bonding oxide layer for fusion bonding with seismic mass layer 24. Bonding of seismic mass layer 24 with substrate layer 14 is achieved by superposing seismic mass layer 24 over the side of substrate layer 14 in which recess 36 was etched (as shown in Fig. 6), and bonding seismic mass layer 14 to substrate layer 14 by annealing at high temperatures (e.g., 500°C) to form a strong silicon fusion bond.

After seismic mass layer 24 has been bonded to substrate layer 14 to define a sealed cavity 41 bounded by recess 36 and n-type silicon wafer lamina 34 of substrate layer 14, epitaxially grown n-type film 30 is completely etched away in a two-step process. First, a significant portion of the bulk silicon is removed with tetramethylammonium hydroxide (TMAH), and then ethylene diamine pyrocatecol (EDP) is used to selectively etch away the remainder of n-type film 30 without etching into p⁺⁺ film 26.

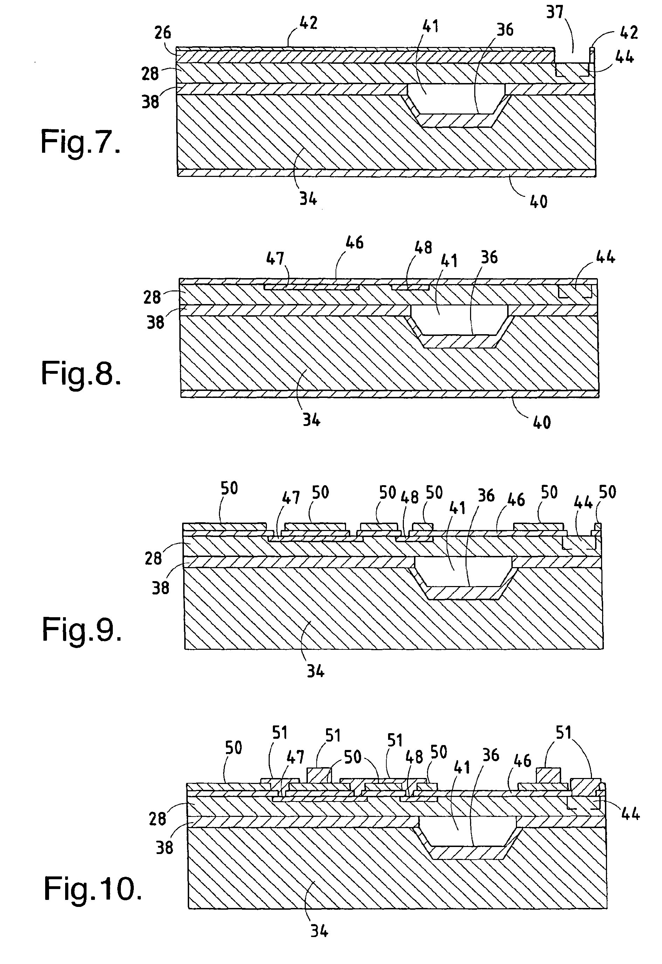

Epitaxially grown p⁺⁺ lamina 26 is selectively removed (Fig. 7) using conventional etching techniques to prepare n-type film lamina 28 for subsequent processing that defines semiconductor features. Next, the exposed surface of the n-type film lamina 28 is oxidized to a thickness of about 13 kÅ. A mask is then printed and features are opened in the oxide layer 42 formed on n-type film lamina 28. In a thermal operation, a phosphorous oxide layer is deposited and n-type dopant (phosphorous) is driven (caused to diffuse) into n-type film lamina 28 to form feature 44. Lamina 26 and layer 42 are then removed, and, thereafter, the surface is oxidized to a thickness of about 1 kÅ to form layer 46.

A resistor mask is then printed onto the surface of the oxidized layer 46. Boron is implanted into wafer lamina 28 using a conventional ion implant process to form resistors 47, 48 (Fig. 8). The implanted p-type dopant (boron) is annealed and the modified surface of lamina 28 is oxidized to a thickness of about 2 kÅ.

The phosphorous deposition can be replaced by an n-type implant. In this case, the order of the phosphorous implant and the resistor implant would be reversed. This process may be preferred for particular applications.

In a plasma deposition process, a silicon nitride layer 50 (Fig 9) is deposited to a thickness of about 2 to about 3 kÅ.

Another mask is printed on the wafer, and exposed portions of thermal oxide layer 48 are removed. Electrical contacts are formed in a two-step process. First, portions of the silicon nitride layer are removed, and then portions of the thermal oxide layer are removed. This is done with two separate masks. A film 51 (Fig. 10) of aluminium/silicon is sputtered on the wafer surface to a thickness of about 12 kÅ. Portions of metal film 51 are removed to make a metal pattern. Thereafter, a de-freckle etch (a secondary etch process) is used to remove any remaining isolated silicon-rich particles.

In separate plasma deposition processes, about 2 kÅ of silicon oxide is deposited to form layer 54 (Fig. 11), and thereafter, about 8 kÅ of silicon nitrate is deposited to form layer 56. A passivation mask is printed, and a reactive ion etch (RIE) process is used to remove the silicon nitride in selected areas. The plasma deposited silicon oxide is removed in the same areas. A window mask is then printed on the surface, and thermal oxide is removed in selected areas.

A cantilevered seismic mass 12 is formed by printing a beam mask onto the surface of the epitaxially grown silicon lamina 30 and etching through the full thickness of the epitaxially grown silicon lamina 30 to underlying cavity 40 using directed reactive ion etch (DRIE) process to cut a gap 60 (Fig. 12) defining a cantileverly supported seismic mass 12.

Separately prepared cap wafer 16 (Fig. 13) is bonded to the top side of seismic mass layer 24.

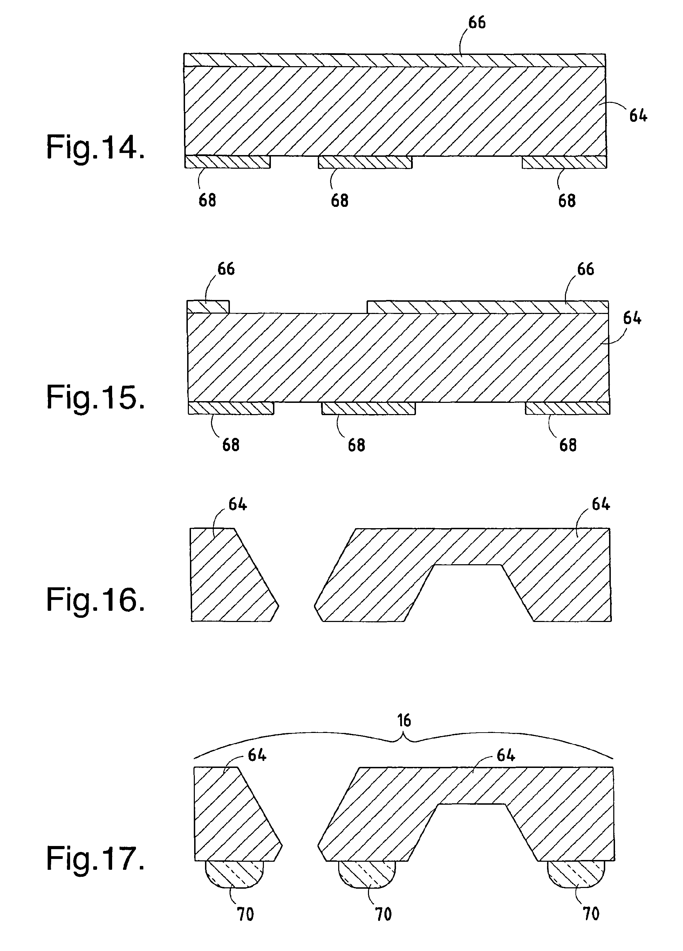

Cap wafer 16 is prepared by thermally oxidizing a silicon wafer 64 (Fig. 14). The thickness of silicon wafer 64 is not particularly critical. However, a suitable thickness is about 25 mils. Preferably, silicon wafer 64 is polished on both sides, and the polished surfaces are thermally oxidized to form oxide layers 66, 68 having a thickness of about 22-24 kÅ. A recess mask is printed and openings are etched in oxide layers 66, 68 (Fig. 15). Thereafter, a mask is printed and openings are etched in the oxide layer 66 (as shown in Fig. 16). Wafer 64 may be etched using potassium hydroxide through the full thickness of the wafer. The remaining oxide is stripped, and a glass frit material 70 (Fig. 17) is printed and reflowed.

To operate the impact detector, a bias voltage is applied across the VP and VN contacts. The bias voltage creates an electrostatic force between seismic mass 12 and substrate 14. When an impulse force is applied, seismic mass 12 is displaced, and if the impulse is large enough, seismic mass 12 will contact the bottom of the cavity 22 (Fig. 13). The electrostatic force increases with the inverse square of the separation between the two plates. Once seismic mass 12 contacts the bottom of cavity 22, it remains in a latched position until the bias across the VP and VN contacts is brought to a sufficiently low potential for the restoring force of the structure to overcome the electrostatic force.

The position of seismic mass 12 can be detected by sensing resistors 47, 48. Silicon is piezoresistive. This means that the resistance of the material changes when stress is applied. Resistors 47, 48 implanted in the supporting beam are connected using a conventional metalization process. By monitoring the resistance of the sensing resistors, the position of the mass can be determined. The sensing resistors may be electrically connected in a Wheatstone bridge circuit arrangement, with the output of the bridge proportional to the displacement of the seismic mass. The positions of the mass can also be monitored by detecting the capacitance change between the VP and VN nodes. When the mass is in the latched position, the capacitance will go up substantially.

Air in the cavity between seismic mass 12 and the bottom of cavity 22 acts in a manner similar to a lubricating film. When the film is squeezed by moving seismic mass 12, the film responds with a pressure that is proportional to the velocity of the movement. This force acts as a damper in a spring-mass system. By choosing the seismic mass 12 design, properties and pressure of the fluid, and cavity depth, one can design impact detector 10 to respond to acceleration impulses of different duration.

The thickness of the supporting beam and seismic mass 12 are identical in the illustrated embodiment. However, the shape of the seismic mass and the thickness of the supporting beam or beams can be modified to respond to acceleration impulses of different magnitude.

Fig. 2 shows the results of a test of the impact detector. The detector was operated with a bias of 45 volts across the VP and VN contacts. The device was subjected to acceleration impulses of amplitude varying from 150 G to 340 G (1 G is equal to 32 feet per sec² or 9.8 meters per sec²). Up to about 230 G, the device output tracked the acceleration impulse. At 260 and 280 G, the effect of the electrostatic force added a lag to the fall of the acceleration pulse. At 296 G and above, the electrostatic force latched the mass against the bottom of the cavity, where it remained until the bias voltage was removed.

It will be understood by those who practice the invention and those skilled in the art, that various modifications and improvements may be made to the invention without departing from the spirit of the disclosed concept. The scope of protection afforded is to be determined by the claims and by the breadth of interpretation allowed by law.

## Claims

1. A process for making an impact detector, comprising:
fabricating a semiconductive substrate having a recess in a surface thereof;
fabricating a semiconductive seismic mass layer;
fixing the seismic mass layer to the surface of the substrate having the recess so that the seismic mass layer covers the recess in the surface of the substrate;
etching a portion of the seismic mass layer overlying the recess to form a seismic mass that is supported over the recess by at least one beam;
printing an electrically conductive circuit on the seismic mass layer and on the substrate to allow an electrostatic force to be applied between the seismic mass and the substrate; and
fixing a cap over the seismic mass to define a sealed cavity enclosing the seismic mass between the recess and the cap.

2. The process of claim 1, wherein the seismic mass layer is etched to form a seismic mass that is cantilevered over the recess.

3. The process of claim 1, further comprising implanting at least one resistor in a portion of the seismic mass layer that overlies the recess, and printing an electrically conductive circuit on the seismic mass layer to facilitate measurement of the electrical resistance of the resistor in the seismic mass layer.

4. The process of claim 1, wherein the semiconductive seismic mass layer comprises an n-type silicon wafer, and a p⁺⁺ film epitaxially grown on the silicon wafer.

5. The process of claim 4, wherein the p⁺⁺ layer comprises silicon doped with boron and germanium.

6. The process of claim 1, wherein the semiconductive seismic mass layer comprises a silicon-on-insulator structure, and an oxide film on the mass layer acts as an etch-stop.

7. The process of claim 1, wherein the semiconductive seismic mass layer comprises a p-type silicon wafer, and an n⁺⁺ film epitaxially grown on the silicon wafer.

8. The process of claim 5, wherein the thickness of the p⁺⁺ film is from about 2.5 to about 5 µm.

9. The process of claim 8, wherein the concentration of the boron is from about 1.2 x 10²⁰ atoms per cubic centimeter to about 1.5 x 10²⁰ atoms per cubic centimeter.

10. The process of claim 9, wherein the germanium concentration is about 2% by weight.

11. The process of claim 3, in which the resistor is implanted in the seismic mass layer by ion implanting boron into the silicon wafer.

12. An impact detector, comprising:
a semiconductive substrate having a recess;
a semiconductive seismic mass supported over the recess by at least one beam;
a first electrical circuit on the seismic mass layer, and a second electrical circuit on the substrate, the first and second circuits configured to allow an electrostatic force to be applied between the seismic mass and the substrate; and
a cap over the seismic mass, the cap being configured to enclose the seismic mass in a sealed cavity defined between the recess and the cap.

13. The impact detector of claim 10, wherein the seismic mass layer is cantilevered over the recess.

14. The impact detector of claim 10, further comprising at least one resistor implanted in the seismic mass layer, and an electrically conductive circuit on the seismic mass layer to facilitate measurement of the electrical resistance of the resistor in the seismic mass layer.

15. The impact detector of claim 14, wherein the resistor is comprised of boron doped silicon.

16. A process for measuring acceleration, comprising providing an impact detector according to claim 14 which has a plurality of resistors implanted in the seismic mass layer, the resistors electrically connected in a Wheatstone bridge circuit arrangement with the output of the bridge proportional to the displacement of the seismic mass during the acceleration; and measuring the output from the circuit.

17. A process for measuring acceleration, comprising measuring capacitance change between VP and VN nodes of an impact detector according to claim 14.
